# EUROPÄISCHE PATENTSCHRIFT

(11) **EP 3 235 275 B1**
(45) Veröffentlichungstag und Bekanntmachung des Hinweises auf die Patenterteilung: **06.11.2019**
(21) Anmeldenummer: 15817078.7
(22) Anmeldetag: 15.12.2015
(51) Int. Cl.: H04W 12/04, H04W 12/06, H04L 9/32

(54) **EINBRINGEN EINER IDENTITÄT IN EIN SECURE ELEMENT**
CASTING AN IDENTITY INTO A SECURE ELEMENT
GRAVER UNE IDENTITE DANS UN ELEMENT SUR

(30) Priorität: 16.12.2014 DE 102014018867
(43) Veröffentlichungstag der Anmeldung: 25.10.2017
(73) Patentinhaber: Giesecke+Devrient Mobile Security GmbH, 81677 München (DE)
(72) Erfinder: WIMBÖCK, Ulrich, 82327 Tutzing (DE); RUDOLPH, Jens, 80639 München (DE)
(86) Internationale Anmeldenummer: PCT/EP2015/002581
(87) Internationale Veröffentlichungsnummer: WO 2016/096146

(56) Entgegenhaltungen:
- WO-A1-2011/076491
- WO-A1-2014/094615
- GB-A- 2 512 944
- MATSUNAKA T ET AL: "Device Authentication and Registration Method Assisted by a Cellular System for User-Driven Service Creation Architecture", CONSUMER COMMUNICATIONS AND NETWORKING CONFERENCE, 2009. CCNC 2009. 6TH IEEE, IEEE, PISCATAWAY, NJ, USA, 10. Januar 2009 (2009-01-10), Seiten 1-5, XP031425437, ISBN: 978-1-4244-2308-8

## Beschreibung

### Gebiet der Erfindung

Die Erfindung betrifft ein Verfahren zum Einbringen einer Identität in ein Secure Element.

Zur Nutzung eines mobilen Endgeräts wie Smartphones oder Mobiltelefons in einem Mobilfunknetzwerk eines Netzbetreibers enthält das Endgerät ein Secure Element. Ein weiterer und verbreiteter Begriff für das Secure Element im Mobilfunkbereich ist Teilnehmeridentitätsmodul. Das Secure Element kann entweder als entfernbare Plug-In SIM-Karte (SIM = Subscriber Identity Module) oder USIM-Karte (Universal SIM) oder UICC (Universal Integrated Circuit Card) gestaltet sein, oder alternativ als festeingelötetes eUICC (embedded UICC) oder eSIM oder eUSIM.

### Stand der Technik

In dem Dokument "Device Authentication and Registration Method Assisted by a Cellular System for User-Driven Service Creation Architecture" von Takashi Matsunaka et.al., vom 10. Januar 2009, Seiten 1 bis 5, veröffentlicht auf der Consumer Communication and Networking Conference, CCNC 2009, wird es Benutzern ermöglicht, ein sicheres privates Netzwerk als Träger für eigene privaten Dienste benutzergesteuert unter Nutzung der derzeit verfügbaren Zugangssysteme zu schaffen. Dieses Netzwerk wird als persönliches Netzwerk bezeichnet und ist eine Erweiterung des Konzepts des Personal Area Network, PAN. Es wird von den persönlichen Geräten organisiert, die sich auf Dienstleistungen beziehen, die die Nutzer in Anspruch nehmen oder anbieten möchten. Dieses Papier konzentriert sich auf die Sicherheitsfrage: Wie kann die Berechtigung von Benutzern oder Geräten, die einer PN beitreten möchten, zertifiziert werden? Es schlägt vor, eine Vorrichtung zur Authentifizierung und Registrierung von Geräten, mit Hilfe von Mobilfunksystemen, IMS/MMD (IP Multimedia System/ Multimedia Domain) vor. Die WO 2014/094615 A1 beschreibt ein Verfahren zum Herstellen einer Netzwerkverbindung zwischen einem Netzwerkgerät und einem WLAN mit: Bestimmen, ob zum Zeitpunkt der Anforderung einer Netzwerkzuordnung eine frühere Sicherheitszuordnung zwischen dem Netzwerkgerät und dem WLAN besteht, und Einrichten einer neuen Sicherheitszuordnung zwischen dem Netzwerkgerät und dem WLAN unter Verwendung von Sicherheitsdaten, die im Zuge der Einrichten der früheren Sicherheitszuordnung erzeugt wurden, wenn die frühere Sicherheitszuordnung besteht.

Bei der Produktion von Secure Elements muss in jedes Secure Element eine individuelle Identität eingebracht werden. Danach kann in das Secure Element eine Subskription geladen werden, welche Datensätze (z.B. Schlüssel) zur Nutzung des Endgeräts im Mobilfunknetz umfasst. Die Subskription ist nicht Gegenstand der Erfindung. Die Identität umfasst in der Regel zwei Komponenten. Eine erste Komponente ist eine ID genannte anonyme Nummer. Eine zweite Komponente ist ein Schlüsselsatz bestehend aus einem oder mehreren zur ID gehörigen Secure-Element-Schlüsseln. Jede ID ist eindeutig zu vergeben. Eine ID darf nicht zweimal vergeben werden. Als Secure-Element-Schlüssel kann wahlweise ein symmetrischer oder ein asymmetrischer Schlüssel vorgesehen sein.

Ein bekanntes Verfahren zum Einbringen der Identität in ein Secure Element besteht in der individuellen Personalisierung eines jeden einzelnen Secure Element. Dabei müssen an einer Personalisierungsstation in einer Produktionsumgebung in jedes einzelne Secure Element Personalisierungsdaten implementiert werden. Dieses Verfahren ist langsam und nimmt insbesondere viel Zeit innerhalb der Produktionsumgebung ein und ist somit teuer.

Außerhalb des Mobilfunkbereichs ist es bekannt, ein Secure Element sich ausgehend von einem universellen Master-Schlüssel oder Masterkey selbst individualisieren zu lassen. Dazu wird in jedes Secure Element einer Charge von Secure Elements dasselbe identische Betriebssystem (OS, operating system) umfassend den Master-Schlüssel geladen. Ausgehend vom Master-Key und einer individuellen Information (z.B. einer Chip-Seriennummer eines im Secure Element enthaltenen Chips oder einer Zufallszahl) leitet jedes Secure Element intern einen individuellen Secure-Element Schlüssel ab. Der Master-Schlüssel steht unter der Verwaltung einer Zertifizierungsstelle, die später die Echtheit von Secure-Element-Schlüsseln mittels des Master-Schlüssels verifizieren kann, so dass nur aus oder mit dem Master-Schlüssel abgeleitete Secure-Element-Schlüssel als echt anerkannt werden. Bei Verwendung einer Zufallszahl besteht Kollisionsgefahr zwischen Secure-Element-Schlüsseln unterschiedlicher Secure Elements, d.h. die Individualität des Secure-Element-Schlüssels ist nicht automatisch sichergestellt. Eine derartige nachgelagerte Erzeugung von Secure-Element-Schlüsseln hat den Vorteil, dass in der Produktionsumgebung nur das für alle Secure Elements identische Betriebssystem programmiert werden muss. Die zeitaufwendige Individualisierung kann außerhalb der Produktionsumgebung erfolgen, z.B. beim Endkunden, und blockiert somit keine Produktionsressourcen. Eine Schwachstelle des Verfahrens ist, dass bei Bekanntwerden des Master-Schlüssels ohne Autorisierung Secure-Element-Schlüssel abgeleitet werden können, die bei der Verifizierung als echt erkannt werden.

Zur Ableitung eines Secure-Element-Schlüssels aus einem Master-Schlüssel gibt es vom Grundsatz her zwei Möglichkeiten, nämlich ein symmetrisches und ein asymmetrisches Schlüsselableitungsverfahren.

Beim symmetrischen Schlüsselableitungsverfahren wird aus einem symmetrischen Master-Schlüssel und einer individuellen Information, wie z.B. Chip-Seriennummer oder einer Zufallszahl, ein symmetrischer Secure-Element-Schlüssel abgeleitet.

Beim asymmetrischen Schlüsselableitungsverfahren wird durch das Secure Element ein Public-Private-Schlüsselpaar umfassend einen öffentlichen (public) Schlüssel und den entsprechenden (geheimen) privaten Schlüssel erzeugt. Als Master-Schlüssel ist in diesem Fall der private Schlüssel der Zertifizierungsstelle vorgesehen. Das Secure Element erzeugt eine Secure-Element-Signatur, indem sie den eigenen öffentlichen Schlüssel mit dem Master-Schlüssel, also dem privaten Schlüssel der Zertifizierungsstelle, signiert. Die Zertifizierungsstelle verifiziert, zur Echtheitsprüfung des Secure-Element, die Secure-Element-Signatur mit ihrem öffentlichen Schlüssel.

### Zusammenfassung der Erfindung

Der Erfindung liegt die Aufgabe zu Grunde, ein sicheres Verfahren zum Einbringen einer Identität in ein Secure Element zu schaffen, bei dem die individuelle Personalisierung eines jeden Secure Element entbehrlich ist und in der Produktionsumgebung alle Secure Elements - zumindest in einem ersten Produktionsschritt - identisch programmiert werden können.

Die Aufgabe wird gelöst durch ein Verfahren nach Anspruch 1. Vorteilhafte Ausgestaltungen der Erfindung sind in den abhängigen Ansprüchen angegeben.

Beim Verfahren nach Anspruch 1 wird ein universelles Betriebssystem, bevorzugt in Form eines Betriebssystem-Speicherabbilds (Image), in ein Secure Element eingebracht. Im eingebrachten Betriebssystem bzw. Speicherabbild ist ein Master-Schlüssel enthalten. Aus dem Master-Schlüssel wird zunächst im Secure Element ein Secure-Element-Schlüssel-Datum abgeleitet, beispielsweise auf an sich bekannte Weise.

Das erfindungsgemäße Verfahren nach Anspruch 1 zeichnet sich dadurch aus, dass ein aus einem Master-Schlüssel abgeleitetes Secure-Element-Schlüssel-Datum (z.B. symmetrischer Secure-Element-Schlüssel oder mit dem Master-Schlüssel signierter asymmetrischer Secure-Element-Schlüssel, vgl. alternative Ausführungsformen gemäß Ansprüchen 2 und 3) nur für die erstmalige Authentisierung temporär gültig ist. Sobald diese erfolgt ist, wird das temporäre Secure-Element-Schlüssel-Datum durch ein endgültiges Secure-Element-Schlüssel-Datum ersetzt. Nachfolgende Authentisierungen können nur noch mit dem endgültigen Secure-Element-Schlüssel-Datum (erfolgreich, d.h. positiv) erfolgen. Das temporäre Secure-Element-Schlüssel-Datum wird ungültig. Da das endgültige Secure-Element-Schlüssel-Datum vom Master-Schüssel unabhängig ist, sind bei einem korrumpierten Master-Schlüssel die endgültigen Secure-Element-Schlüssel-Daten nicht in Folge korrumpiert. Vielmehr besteht die Möglichkeit, von korrumpierten Master-Schlüsseln abgeleitete temporäre Secure-Element-Schlüssel-Daten gar nicht erst zum Erzeugen von endgültigen Secure-Element-Schlüssel-Daten zuzulassen. Hierdurch werden Secure Elements, deren zu Grunde liegende Master-Schlüssel korrumpiert wurden, niemals dauerhaft für Authentisierung im Mobilfunknetz freigegeben, werden also niemals im Mobilfunknetz aktiviert. Daher ist gemäß Anspruch 1 ein sicheres Verfahren zum Einbringen einer Identität in ein Secure Element geschaffen, das auch ohne individuelle Personalisierung eines jeden Secure Element auskommt.

Der Master-Schlüssel steht vorzugsweise unter der Verwaltung einer Zertifizierungsstelle, die den Master-Schlüssel erzeugt und später verifiziert.

Als ID kann beispielsweise eine Hardware-Kennung eines Chips des Secure Element vorgesehen sein, beispielsweise eine Chip-Seriennummer oder Karten-Seriennummer.

Die erstmalige Authentisierung erfolgt wahlweise beim Endkunden, wenn dieser sein mobiles Endgerät erstmals mit dem Secure Element in Betrieb nimmt, um das Secure Element im Mobilfunknetz seines gewählten Anbieters zu aktivieren und hierdurch sein Mobiltelefon einsatzfähig zu machen. Alternativ erfolgt die erstmalige Authentisierung, d.h. Aktivierung des Secure Element, bereits beim Endgerät-Hersteller, und das Endgerät wird mit bereits aktiviertem Secure Element an den Endkunden ausgegeben.

Angegeben wird insbesondere auch ein Verfahren gemäß einer ersten, symmetrischen Ausführungsform, gemäß Anspruch 2, wobei
- als Master-Schlüssel ein symmetrischer Schlüssel einer Zertifizierungsstelle vorgesehen ist,
- in Schritt b) im Secure Element aus dem Master-Schlüssel und einem Individualisierungsdatum, insbesondere einem individuellen Datum des Secure Element oder einer Zufallszahl, als temporärer Secure-Element-Schlüssel-Datum ein symmetrischer temporärer Secure Element Schlüssel abgeleitet wird, und
- in Schritt c) anlässlich der erstmaligen Authentisierung das Hintergrundsystem dem Secure Element eine endgültige ID zuweist und als endgültiges Secure-Element-Schlüssel-Datum entweder beim Hintergrundsystem oder im Secure Element ein symmetrischer endgültiger Secure Element Schlüssel erzeugt wird und an diejenige Instanz von Secure Element und Hintergrundsystem, welche nicht den endgültigen Secure-Element-Schlüssel erzeugt hat, übermittelt wird.

Angegeben wird weiter auch ein Verfahren gemäß einer zweiten, asymmetrischen Ausführungsform, gemäß Anspruch 3, wobei
- als Master-Schlüssel ein privater Schlüssel einer Zertifizierungsstelle vorgesehen ist,
- in Schritt b) im Secure Element ein temporäres Public-Private-Schlüsselpaar umfassend einen temporären Secure Element öffentlichen Schlüssel und einen temporären Secure Element privaten Schlüssel erzeugt wird und als Secure-Element-Schlüssel-Datum eine temporäre Secure-Element-Signatur erzeugt wird, indem der temporäre Secure Element öffentliche Schlüssel mit dem Master-Schlüssel signiert wird, und
- in Schritt c) im Secure Element ein endgültiges Public-Private-Schlüsselpaar umfassend einen endgültigen Secure Element öffentlichen Schlüssel und einen endgültigen Secure Element privaten Schlüssel erzeugt wird, wobei anlässlich der erstmaligen Authentisierung der endgültige Secure Element öffentliche Schlüssel an das Hintergrundsystem übermittelt wird, und wobei als endgültiges Secure-Element-Schlüssel-Datum beim Hintergrundsystem eine endgültige Secure-Element-Signatur erzeugt wird, indem das Hintergrundsystem den endgültigen Secure Element öffentlichen Schlüssel mit dem Master-Schlüssel signiert, und wobei die endgültige Secure-Element-Signatur vom Hintergrundsystem an das Secure Element übermittelt wird.

Im asymmetrischen Fall (Anspruch 3) erzeugt die Zertifizierungsstelle ein Public-Private-Master-Schlüsselpaar. Der private Master-Schlüssel dieses Paars dient zur Authentisierung einer vom Secure Element gesendeten Signatur, die mit dem öffentlichen Master-Schlüssel erzeugt ist.

Die symmetrische und die asymmetrische Ausführungsform haben beide den Vorteil, dass das endgültige Secure-Element-Schlüssel-Datum in Abstimmung mit dem Hintergrundsystem erzeugt und in das Secure Element geladen werden. Somit können Kollisionen zwischen Identitäten durch Kontrolle seitens des Hintergrundsystems vermieden werden.

Bei der asymmetrischen Variante des Verfahrens wird wahlweise die Secure-Element-Signatur genauer erzeugt, indem das Hintergrundsystem die Konkatenation aus dem endgültigen Secure Element öffentlichen Schlüssel und zusätzlich der ID mit dem Master-Schlüssel signiert. Als ID kann entweder die ursprüngliche ID oder eine anlässlich der erstmaligen Authentisierung neu erzeugte endgültige ID vorgesehen sein.

In Schritt c) wird wahlweise weiter anlässlich der erstmaligen Authentisierung das temporäre Secure-Element-Schlüssel-Datum beim Hintergrundsystem verifiziert und das endgültige Secure-Element-Schlüssel-Datum nur im Gutfall einer positiven Verifizierung abgeleitet. Andernfalls, im Schlechtfall fehlerhafter Verifizierung wird kein endgültiges Secure-Element-Schlüssel-Datum abgeleitet. Als Schlechtfall kann insbesondere vorgesehen sein, dass der Master-Schlüssel, der dem gerade verifizierten Secure Element zu Grunde liegt, beim Hintergrundsystem als korrumpiert bekannt geworden ist. Würde das temporäre Secure-Element-Schlüssel-Datum direkt für dauerhafte Authentisierung verwendet, könnte ein Angreifer massenhaft gültige Secure-Element-Schlüssel-Daten erzeugen und verbreiten. Bei der erfindungsgemäßen Lösung bekommt ein Secure Element, dessen temporäres Secure-Element-Schlüssel-Datum aus einem korrumpierten Master-Schlüssel erzeugt ist, kein dauerhaft gültiges Secure-Element-Schlüssel-Datum. Somit kann das Secure Element niemals zum Telefonieren verwendet werden.

Wahlweise wird der Master-Schlüssel nach der Ableitung des temporären Secure-Element-Schlüssel-Datums, insbesondere entweder unmittelbar nach der Ableitung des temporären Secure-Element-Schlüssel-Datums oder spätestens nach der Ableitung des endgültigen Secure-Element-Schlüssel-Datums, aus dem Secure Element gelöscht. Hierdurch kann der Master-Schlüssel, der ohnehin nicht mehr benötigt wird, nicht aus dem Secure Element ausgespäht werden. Wenn das Secure Element die sichere Produktionsumgebung verlässt, enthält es vorzugsweise keinen Master-Schlüssel mehr.

Wahlweise wird das Betriebssystem in Form eines Betriebssystem-Speicherabbilds (OS-Image, OS = operating system) in das Secure Element geladen.

Wahlweise wird der Master-Schlüssel regelmäßig gewechselt, regelmäßig z.B. an Zeitablauf oder Nutzungshäufigkeit bemessen. Genauer ist dies z.B. verwirklicht, indem der Master-Schlüssel eine dahingehend begrenzte Gültigkeit hat, dass ein temporäres Secure-Element-Schlüssel-Datum, das anlässlich einer Verifizierung positiv verifizierbar ist, nur innerhalb der begrenzten Gültigkeit erzeugbar ist, insbesondere innerhalb eines festgesetzten Gültigkeitszeitraums oder/und für eine festgesetzte Anzahl von Erzeugungen eines temporären Secure-Element-Schlüssel-Datums.

Wahlweise wird eine erstmalige Authentisierung des Secure Element gegenüber dem Hintergrundsystem unter Verwendung des temporären Secure-Element-Schlüssel-Datums durchgeführt, anlässlich derer das temporäre Secure-Element-Schlüssel-Datum durch das endgültige Secure-Element-Schlüssel-Datum ersetzt wird und das Secure Element zur Authentisierung im Mobilfunknetz aktiviert wird. Durch die Aktivierung kann das Secure Element dauerhaft im Mobilfunknetz verwendet werden, insbesondere für Telefonate, Datenaustausch und dergleichen. Der Begriff dauerhaft wird hierbei so verstanden, dass etwaige Nutzungseinschränkungen wie Vertragsablauf, SIM-Lock, Vertragsbeendigung durch Nichtaufladen von Guthaben oder dergleichen berücksichtigt werden und die Aktivierung dennoch als "dauerhaft" im Sinn der Erfindung angesehen wird.

Wahlweise ist die ID als temporäre ID gestaltet, insbesondere als eine temporäre ID, die für die oder eine Mehrzahl von Secure Elements identisch ist, wobei anlässlich der erstmaligen Authentisierung die temporäre ID durch eine endgültige ID ersetzt wird. Hierdurch wird anlässlich der erstmaligen Authentisierung die gesamte Identität (umfassend ID und Secure-Element-Schlüssel-Datum) ersetzt, von einer temporären Identität zu einer endgültigen Identität. Diese Ausführungsform ist besonders vorteilhaft einsetzbar in einem Szenario, bei dem eine gesamte Charge von Secure Elements zunächst mit ein und derselben identischen Identität ausgestattet wird. Dies macht die Produktion der Secure Elements einfach, schnell und kostengünstig. Erst anlässlich der erstmaligen Authentisierung werden die Secure Elements durch endgültige, einmalige Identitäten unterscheidbar gemacht.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: ein mobiles Endgerät mit zwei möglichen Secure Elements und einem Hintergrundsystem;
- Fig. 2: ein Ablaufdiagramm zur Ableitung eines endgültigen Secure-Element-Schlüssel-Datums.

### Detaillierte Beschreibung von Ausführungsbeispielen

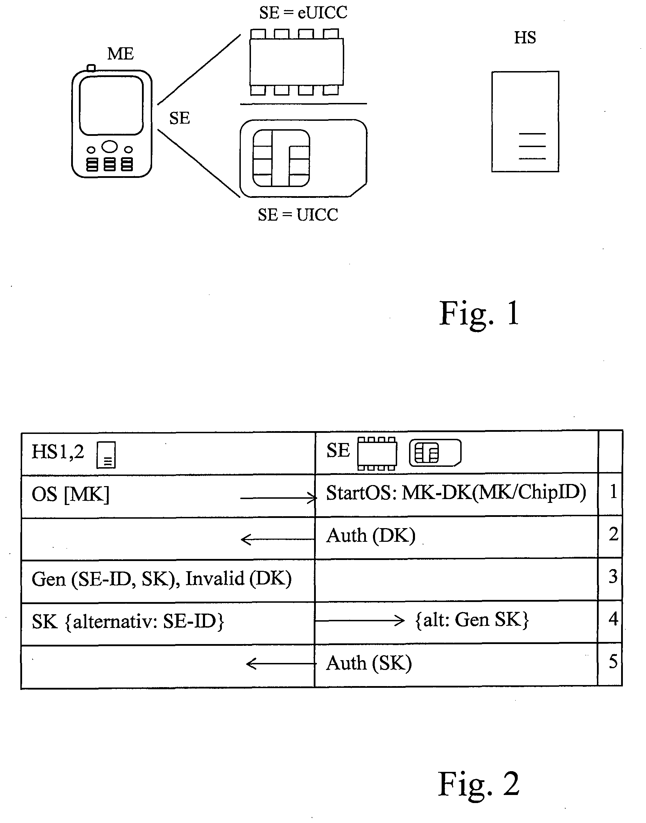

Fig. 1 zeigt ein mobiles Endgerät ME mit zwei möglichen Secure Elements SE, nämlich einem embedded SE eUICC und einer SIM-Karte UICC, sowie einem Hintergrundsystem HS.

Fig. 2 zeigt ein Ablaufdiagramm über ein Verfahren zur Ableitung eines endgültigen Secure-Element-Schlüssel-Datums SK in einem Secure Element SE (= eUICC oder UICC) wie den in Fig. 1 gezeigten.

In einem Schritt 1, der in einer Produktionsumgebung beim Hersteller des Secure Element erfolgt, wird beim Hintergrundsystem HS1 des Herstellers ein Speicherabbild OS[MK] eines Betriebssystems OS bereitgestellt. Das Speicherabbild OS[MK] enthält einen Master-Schlüssel MK. Das Speicherabbild OS[MK] wird in das Secure Element SE geladen und dort implementiert. Anlässlich des erstmaligen Hochfahrens des Betriebssystems OS wird aus dem Master-Schlüssel MK und unter Verwendung einer Chip-Seriennummer ChipID ein temporäres Secure-Element-Schlüssel-Datum DK abgeleitet. der Master-Schlüssel MK wird aus dem Secure Element SE gelöscht. Das Secure Element SE wird nun an einen Händler ausgeliefert und schließlich an einen Nutzer (Endkunden), oder direkt an einen Nutzer (Endkunden). Bei einem embedded Secure Element eUICC wird das gesamte mobile Endgerät ME mit dem Secure Element an den Händler oder Nutzer ausgeliefert. Wie erwähnt kann alternativ das Secure Element SE beim Endgerät-Hersteller aktiviert werden (nachfolgend beschriebene Schritte 2, 3, 4) und dann erst an den Händler oder Endkunden ausgegeben werden.

In einem Schritt 2 nimmt der Nutzer sein mobiles Endgerät ME mit dem Secure Element SE in Betrieb und veranlasst die Aktivierung seines Secure Element im Hintergrundsystem HS2 seines Netzbetreibers (das in der Regel vom Hintergrundsystem des Secure Element Herstellers unterschiedlich ist). Zur Aktivierung sendet der Nutzer eine Authentisierungsanfrage mit dem temporären Secure-Element-Schlüssel-Datum DK an das Hintergrundsystem HS2 seines Netzbetreibers.

In einem Schritt 3 prüft das Hintergrundsystem HS2 des Netzbetreibers die Authentisierungsanfrage, erzeugt im Gutfall ein endgültiges Secure-Element-Schlüssel-Datum SK und eine endgültige Secure Element ID SE-ID und invalidiert das temporäre Secure-Element-Schlüssel-Datum DK, macht es also ungültig. In einem Schritt 4 sendet das Hintergrundsystem HS2 das endgültige Secure-Element-Schlüssel-Datum SK an das Secure Element SE. Gemäß einer Variante des Verfahrens wird in Schritt 4 beim Hintergrundsystem nur eine endgültige Secure Element ID SE-ID erzeugt und an das Secure Elements SE gesendet, und im Secure Element SE wird das endgültige Secure-Element-Schlüssel-Datum SK erzeugt. Das mobile Endgerät ME ist nun einsatzbereit

In einem Schritt 5 telefoniert der Nutzer mit dem mobilen Endgerät ME und führt dabei mittels des Secure Element SE eine Authentisierung mit dem endgültigen Secure-Element-Schlüssel-Datum SK gegenüber dem Hintergrundsystem HS2 durch.

## Patentansprüche

1. Verfahren zum Einbringen einer Identität in ein Secure Element (SE), wobei:
- das Secure Element (SE) zur Authentisierung eines Mobilfunk-Endgeräts (ME), in dem das Secure Element (SE) betrieben wird, gegenüber einem Hintergrundsystem (HS2) des Mobilfunknetzes vorbereitet ist,
- die Identität ID, und ein Secure-Element-Schlüssel-Datum umfasst, und
- das Secure-Element-Schlüssel-Datum zur Durchführung der Authentisierung eingerichtet ist, mit den Verfahrensschritten:
a) Laden eines Betriebssystems (OS) in das Secure Element, wobei das Betriebssystem (OS) einen Master-Schlüssel (MK) umfasst, welcher für eine Mehrzahl von Secure Elements (SE) identisch ist,
b) Erzeugen des Secure-Element-Schlüssel-Datums unter Verwendung des Master-Schlüssels (MK);
**gekennzeichnet durch:**
c) Verwenden des Secure-Element-Schlüssel-Datums als temporäres Secure-Element-Schlüssel-Datum (DK) anlässlich einer erstmaligen Authentisierung des Secure Element (SE) gegenüber dem Hintergrundsystem (HS2)
d) Ersetzen des temporären Secure-Element-Schlüssel-Datums (DK) durch ein vom Master-Schlüssel (MK) unabhängiges endgültiges Secure-Element-Schlüssel-Datum (SK) für nachfolgende Authentisierungen des Secure Elements (SE) gegenüber dem Hintergrundsystem (HS2); und
e) Invalidieren des temporären Secure-Element-Schlüssel-Datums (DK) für weitere Authentisierungen.

2. Verfahren nach Anspruch 1, wobei
- als Master-Schlüssel (MK) ein symmetrischer Schlüssel einer Zertifizierungsstelle vorgesehen ist,
- in Schritt b) im Secure Element (SE) aus dem Master-Schlüssel (MK) und einem Individualisierungsdatum, insbesondere einem individuellen Datum des Secure Element (ChipID) oder einer Zufallszahl, als temporärer Secure-Element-Schlüssel-Datum (DK) ein symmetrischer temporärer Secure Element Schlüssel (DK) abgeleitet wird, und
- in Schritt c) anlässlich der erstmaligen Authentisierung das Hintergrundsystem (HS2) dem Secure Element (SE) eine endgültige ID (SE-ID) zuweist und als endgültiges Secure-Element-Schlüssel-Datum (SK) entweder beim Hintergrundsystem (HS) oder im Secure Element (SE) ein symmetrischer endgültiger Secure Element Schlüssel erzeugt wird und an diejenige Instanz von Secure Element (SE) und Hintergrundsystem (HS2), welche nicht den endgültigen Secure-Element-Schlüssel (SK) erzeugt hat, übermittelt wird.

3. Verfahren nach Anspruch 1, wobei
- als Master-Schlüssel (MK) ein privater Schlüssel einer Zertifizierungsstelle vorgesehen ist,
- in Schritt b) im Secure Element (SE) ein temporäres Public-Private-Schlüsselpaar umfassend einen temporären Secure Element öffentlichen Schlüssel und einen temporären Secure Element privaten Schlüssel erzeugt wird und als Secure-Element-Schlüssel-Datum eine Secure-Element-Signatur erzeugt wird, indem der temporäre Secure Element öffentliche Schlüssel mit dem Master-Schlüssel signiert wird, und
- in Schritt c) im Secure Element ein endgültiges Public-Private-Schlüsselpaar umfassend einen endgültigen Secure Element öffentlichen Schlüssel und einen endgültigen Secure Element privaten Schlüssel erzeugt wird, wobei anlässlich der erstmaligen Authentisierung der endgültige Secure Element öffentliche Schlüssel an das Hintergrundsystem (HS2) übermittelt wird, und wobei als endgültiges Secure-Element-Schlüssel-Datum beim Hintergrundsystem (HS2) eine endgültige Secure-Element-Signatur erzeugt wird, indem das Hintergrundsystem (HS2) den endgültigen Secure Element öffentlichen Schlüssel mit dem Master-Schlüssel signiert, und wobei die endgültige Secure-Element-Signatur vom Hintergrundsystem (HS2) an das Secure Element (SE) übermittelt wird.

4. Verfahren nach Anspruch 3, wobei die Secure-Element-Signatur genauer erzeugt wird, indem das Hintergrundsystem die Konkatenation aus dem endgültigen Secure Element öffentlichen Schlüssel und der ID mit dem Master-Schlüssel (MK) signiert, wobei als ID entweder die ID nach Anspruch 1 oder eine anlässlich der erstmaligen Authentisierung erzeugte endgültige ID (SE-ID) vorgesehen ist.

5. Verfahren nach einem der Ansprüche 1 bis 4, wobei in Schritt c) anlässlich der erstmaligen Authentisierung das temporäre Secure-Element-Schlüssel-Datum (DK) beim Hintergrundsystem (HS2) verifiziert wird und das endgültige Secure-Element-Schlüssel-Datum (SK) nur im Gutfall einer positiven Verifizierung abgeleitet wird und andernfalls kein endgültiges Secure-Element-Schlüssel-Datum (SK) abgeleitet wird.

6. Verfahren nach einem der Ansprüche 1 bis 5, wobei der Master-Schlüssel (MK) nach der Ableitung des temporären Secure-Element-Schlüssel-Datums (DK), und dabei insbesondere entweder unmittelbar nach der Ableitung des temporären Secure-Element-Schlüssel-Datums (DK) oder spätestens nach der Ableitung des endgültigen Secure-Element-Schlüssel-Datums (SK), aus dem Secure Element (SK) gelöscht wird.

7. Verfahren nach einem der Ansprüche 1 bis 6, wobei das Betriebssystem (OS) in Form eines Betriebssystem-Speicherabbilds (OS-Image) in das Secure Element (SE) geladen wird.

8. Verfahren nach einem der Ansprüche 1 bis 7, wobei der Master-Schlüssel (MK) eine dahingehend begrenzte Gültigkeit hat, dass ein temporäres Secure-Element-Schlüssel-Datum (DK), das anlässlich einer Verifizierung positiv verifizierbar ist, nur höchstens innerhalb der begrenzten Gültigkeit erzeugbar ist, insbesondere innerhalb eines festgesetzten Gültigkeitszeitraums oder /und für eine festgesetzte Anzahl von Erzeugungen eines temporären Secure-Element-Schlüssel-Datums (DK).

9. Verfahren nach einem der Ansprüche 1 bis 8, wobei eine erstmalige Authentisierung des Secure Element (SE) gegenüber dem Hintergrundsystem (HS2) unter Verwendung des temporären Secure-Element-Schlüssel-Datums (DK) durchgeführt wird, anlässlich derer das temporäre Secure-Element-Schlüssel-Datum (DK) durch das endgültiges Secure-Element-Schlüssel-Datum (SK) ersetzt wird und das Secure Element (SE) zur Authentisierung im Mobilfunknetz aktiviert wird.

10. Verfahren nach einem der Ansprüche 1 bis 9, wobei die ID als temporäre ID gestaltet ist, insbesondere als eine temporäre ID, die für die oder eine Mehrzahl von Secure Elements identisch ist, und wobei anlässlich der erstmaligen Authentisierung die temporäre ID durch eine endgültige ID (SE-ID) ersetzt wird.

## Claims

1. A method for introducing an identity into a secure element (SE), wherein:
- the secure element (SE) is prepared for authenticating a mobile terminal (ME), in which the secure element (SE) is operated vis-a-vis a background system (HS2) of the mobile communication network,
- the identity, ID, and comprising a secure-element key datum, and
- the secure-element key datum is adapted to carry out the authentication,
with the method steps:
a) loading an operating system (OS) into the secure element, wherein the operating system (OS) comprising a master key (MK) which is identical for a plurality of secure elements (SE);
b) generating the secure element key datum using the master key (MK);
**characterized by**
c) using the secure element key datum as a temporary secure element key date (DK) on the occasion of an initial authentication of the secure element (SE) to the background system (HS2);
d) replacing the temporary Secure Element Key Date (DK) with a final Secure Element Key Date (SK) independent of the Master Key (MK) for subsequent authentications of the Secure Element (SE) to the background system (HS2); and
e) Invalidating the temporary Secure Element Key Date (DK) for further authentications.

2. Method according to claim 1, wherein
- the master key (MK) is a symmetric key of a certification authority,
- in step b) a symmetrical temporary secure element key (DK) is derived in the secure element (SE) from the master key (MK) and an individualization datum, in particular an individual date of the secure element (ChipID) or a random number, as temporary secure element key date (DK), and
- in step c) on the occasion of the initial authentication the background system (HS) assigning a final ID (SE-ID) to the secure element (SE) and a symmetrical final secure element key is generated as the final secure element key datum (SK) either in the background system (HS2) or in the secure element (SE) and is transmitted to that instance of the secure element (SE) and the background system (HS2) which has not generated the final secure element key (SK).

3. Method according to claim 1, wherein
- the master key (MK) is a private key of a certification authority,
- in step b) a temporary public-private key pair comprising a temporary secure element public key and a temporary secure element private key is generated in the secure element (SE) and a secure element signature is generated as the secure element key datum by signing the temporary secure element public key with the master key; and
- in step c) a final public-private key pair comprising a final secure element public key and a final secure element private key is generated in the secure element (SE), the final secure element public key being transmitted to the background system (HS2) on the occasion of the initial authentication, and wherein a final secure element signature is generated as the final secure element key datum in the background system (HS2) by the background system (HS2) signing the final secure element public key with the master key, and wherein the final secure element signature is transmitted from the background system (HS2) to the secure element (SE).

4. Method according to claim 3, wherein the secure element signature is more accurately generated by the background system signing the concatenation of the final secure element public key and the ID with the master key (MK), wherein the ID is either the ID according to claim 1 or a final ID (SE-ID) generated during the initial authentication.

5. Method according to one of the claims 1 to 4, wherein in step c) the temporary secure element key datum (DK) is verified at the background system (HS2) on the occasion of the first authentication and the final secure element key datum (SK) is derived only in the good case of a positive verification and otherwise no final secure element key datum (SK) is derived.

6. Method according to one of claims 1 to 5, wherein the master key (MK) is deleted from the secure element (SE) after the derivation of the temporary secure element key datum (DK), and in particular either immediately after the derivation of the temporary secure element key datum (DK) or at the latest after the derivation of the final secure element key datum (SE).

7. Method according to one of claims 1 to 6, wherein the operating system (OS) is loaded into the secure element (SE) in the form of an operating system memory image (OS image).

8. Method according to one of the claims 1 to 7, wherein the master key (MK) has a limited validity in that a temporary secure element key datum (DK), which can be verified positively on the occasion of a verification, can only be generated at most within the limited validity, in particular within a fixed validity period and/or for a fixed number of generations of a temporary secure element key datum (DK).

9. Method according to one of claims 1 to 8, wherein a first authentication of the secure element (SE) to the background system (HS2) is performed using the temporary secure element key datum (DK), on the basis of which the temporary secure element key datum (DK) is replaced by the final secure element key datum (SK), and the secure element (SE) is activated for authentication in the mobile radio network.

10. Method according to one of claims 1 to 9, wherein the ID is configured as a temporary ID, in particular as a temporary ID which is identical for the or a plurality of secure elements, and wherein on the occasion of the first authentication the temporary ID is replaced by a final ID (SE-ID).

## Revendications

1. Procédé d'introduction d'une identité dans un élément sécurisé (SE) :
- l'élément sécurisé (SE) étant préparé pour l'authentification d'un terminal de téléphonie mobile (ME), dans lequel l'élément sécurisé (SE) est utilisé, par rapport à un système d'arrière-plan (HS2) du réseau de téléphonie mobile,
- l'identité ID comportant une donnée de clé d'élément sécurisé, et
- la donnée de clé d'élément sécurisé étant conçue pour mettre en œuvre l'authentification,
ledit procédé comprenant les étapes suivantes :
a) charger un système d'exploitation (OS) dans l'élément sécurisé, le système d'exploitation (OS) comprenant une clé principale (MK) qui est identique pour plusieurs éléments sécurisés (SE),
b) générer la donnée de clé d'élément sécurisé à l'aide de la clé principale (MK);
**caractérisé par** les étapes suivantes :
c) utiliser la donnée de clé d'élément sécurisé comme donnée de clé d'élément sécurisé temporaire (DK) lors de la première authentification de l'élément sécurisé (SE) par rapport au système d'arrière-plan (HS2) ;
d) remplacer la donnée de clé d'élément sécurisé temporaire (DK) par une donnée de clé d'élément sécurisé définitive (SK) indépendante de la clé principale (MK) et destinée à l'authentification ultérieure de l'élément sécurisé (SE) par rapport au système d'arrière-plan (HS2) ; et
e) invalider la donnée de clé d'élément sécurisé temporaire (DK) pour une authentification ultérieure.

2. Procédé selon la revendication 1,
- une clé symétrique d'une autorité de certification étant prévue comme clé principale (MK),
- une clé d'élément sécurisé temporaire (DK) symétrique étant dérivée, à l'étape b), dans l'élément sécurisé (SE), à partir de la clé principale (MK) et d'une donnée d'individualisation, en particulier d'une donnée individuelle de l'élément sécurisé (ChipID) ou d'un nombre aléatoire, comme donnée de clé d'élément sécurisé temporaire (DK), et
- le système d'arrière-plan (HS2) attribue, à l'étape c), lors de la première authentification, une ID définitive (SE-ID) à l'élément sécurisé (SE) et une clé d'élément sécurisé définitive symétrique étant générée comme donnée de clé d'élément sécurisé (SK) soit dans le système d'arrière-plan (HS) soit dans l'élément sécurisé (SE) et transmise par l'élément sécurisé (SE) et le système d'arrière-plan (HS2) à l'instance qui n'a pas généré la clé d'élément sécurisé définitive (SK).

3. Procédé selon la revendication 1,
- une clé privée d'une autorité de certification étant prévue comme clé principale (MK),
- une paire de clés publique-privée temporaire comprenant une clé d'élément sécurisé publique temporaire et une clé d'élément sécurisé privée temporaire étant générée à l'étape b) dans l'élément sécurisé (SE) et une signature d'élément sécurisé étant générée comme donnée de clé d'élément sécurisé par signature de la clé d'élément sécurisé publique temporaire avec la clé principale, et
- une paire de clés publique-privée définitive comprenant une clé d'élément sécurisé publique définitive et une clé d'élément sécurisé privée définitive étant générée à l'étape c) dans l'élément sécurisé, la clé d'élément sécurisé publique définitive étant transmise au système d'arrière-plan (HS2) lors de la première authentification, et une signature d'élément sécurisé définitive étant générée comme donnée de clé d'élément sécurisé définitive dans le système d'arrière-plan (HS2) par signature, par le système d'arrière-plan (HS2), de la clé d'élément sécurisé publique définitive signée avec la clé principale, et la signature d'élément sécurisé définitive étant transmise par le système d'arrière-plan (HS2) à l'élément sécurisé (SE).

4. Procédé selon la revendication 3, la signature d'élément sécurisé étant générée plus précisément par signature, par le système d'arrière-plan, de la concaténation de la clé d'élément sécurisé publique définitive et de l'ID avec la clé principale (MK), l'ID selon la revendication 1 ou une ID définitive (SE-ID) générée lors de la première authentification étant prévue comme ID.

5. Procédé selon l'une des revendications 1 à 4, la donnée de clé d'élément sécurisé temporaire (DK) étant vérifiée dans le système d'arrière-plan (HS2) à l'étape c) lors de la première authentification et la donnée de clé d'élément sécurisé définitive (SK) n'étant dérivée que dans le cas d'une vérification positive, sinon aucune donnée de clé d'élément sécurisé (SK) n'est dérivée.

6. Procédé selon l'une des revendications 1 à 5, la clé principale (MK) étant supprimée de l'élément sécurisé (SK) après la dérivation de la donnée de clé d'élément sécurisé temporaire (DK), et en particulier soit immédiatement après la dérivation de la donnée de clé d'élément sécurisé temporaire (DK) soit au plus tard après la dérivation de la donnée de clé d'élément sécurisé définitive (SK).

7. Procédé selon l'une des revendications 1 à 6, le système d'exploitation (OS) étant chargé dans l'élément sécurisé (SE) sous la forme d'une image de mémoire de système d'exploitation (image OS).

8. Procédé selon l'une des revendications 1 à 7, la clé principale (MK) ayant une validité limitée dans la mesure où une donnée de clé sécurisée temporaire (DK), qui est vérifiable positivement lors de la vérification, ne peut être générée au plus tard que pendant la validité limitée, en particulier pendant une période de validité déterminée et/ou pour un nombre déterminé de générations d'une donnée de clé d'élément sécurisé temporaire (DK).

9. Procédé selon l'une des revendications 1 à 8, une première authentification de l'élément sécurisé (SE) par rapport au système d'arrière-plan (HS2) étant effectuée à l'aide de la donnée de clé d'élément sécurisé temporaire (DK), lors de laquelle la donnée de clé d'élément sécurisé (DK) est remplacée par la donnée de clé d'élément sécurisé définitive (SK) et l'élément sécurisé (SE) est activé pour l'authentification sur le réseau de téléphonie mobile.

10. Procédé selon l'une des revendications 1 à 9, l'ID étant conçue comme ID temporaire, en particulier comme une ID temporaire qui est identique pour l'au moins un élément sécurisé, et l'ID temporaire étant remplacée par une ID définitive (SE-ID) lors de la première authentification.
